# DEMANDE DE BREVET EUROPEEN

(11) **EP 0 944 210 A1**
(43) Date de publication de la demande: **22.09.1999**
(21) Numéro de dépôt: 99400543.7
(22) Date de dépôt: 08.03.1999
(51) Int. Cl.: H04L 12/56

(54) **Procédé de distribution d'un message dans un réseau**

(30) Priorité: 16.03.1998 FR 9803190
(71) Demandeur: ALCATEL, 75008 Paris (FR)
(72) Inventeur: Laroque, Christian, 92500 Rueil Malmaison (FR); Phan, Cao Thanh, 92500 Rueil Malmaison (FR)
(74) Mandataire: Sciaux, Edmond

(57) **Abrégé**

Pour distribuer un message dans un réseau (R-V ,X, Y)dont l'architecture est variable en fonction des modifications des artères de ce réseau, on envoie un message d'initialisation depuis un noeud auquel aboutit une artère nouvellement créée ou supprimée. Le message d'initialisation est diffusé par des noeuds en amont (S) à des noeuds (Y) en aval d'une manière classique. Chaque noeud en aval, envoie un accusé de réception de ce message d'initialisation au noeud amont qui le lui a envoyé. L'accusé de réception diffère (+, -) selon que le message d'initialisation a été reçu en aval une première fois depuis ce noeud amont, ou a été reçu préalablement depuis un autre noeud amont. On privilégie ensuite l'acheminement des messages par le noeud amont le plus rapide et on bloque l'émission des messages dans le noeud amont arrivé en second.

## Description

La présente invention a pour objet un procédé de distribution d'un message dans un réseau de communications. Les réseaux dont il est question peuvent être des réseaux répartis sur plusieurs pays, par exemple le réseau Internet, des réseaux situés sur un seul pays, par exemple un réseau téléphonique, ou même des réseaux privés internes à certaines entreprises. Les réseaux concernés par l'invention sont des réseaux maillés. Dans un réseau maillé, plusieurs artères peuvent mener d'un noeud du réseau à un autre noeud du réseau. Les noeuds d'un réseau sont munis d'organes, notamment d'ordinateurs, aptes à recevoir des messages, à analyser si ces messages sont destinés à des affiliés du noeud, ou s'ils doivent être acheminés plus loin, par l'intermédiaire de noeuds voisins du noeud concerné.

L'avantage des réseaux maillés est de pouvoir continuer à distribuer les messages même si une des artères du réseau est momentanément ou définitivement neutralisée.

Le principe de l'envoi des messages dans les réseaux, est un principe de diffusion. Selon ce principe, chaque noeud du réseau connaît ses voisins : les noeuds avec lesquels il est directement en contact. De proche en proche, chaque noeud est le voisin d'un autre. De ce fait on peut atteindre tous les noeuds à partir d'un noeud quelconque. Pour diffuser un message, chaque noeud qui reçoit le message, le renvoie à tous les noeuds qui sont ses voisins (à l'exception de préférence de celui qui le lui a envoyé). Ce principe de diffusion présente un inconvénient, en ce sens qu'un même message peut être envoyé à de multiples reprises à un même noeud par tous les voisins de ce noeud qui avaient reçu ce message préalablement. Le réseau travaille alors d'une manière redondante au détriment de son efficacité. Pour remédier à ce problème, il est prévu plusieurs techniques. Il est notamment prévu des conditions d'arrêt de diffusion.

Une première condition d'arrêt consiste à donner un âge au message et à cesser la diffusion d'un message à partir du moment où il est trop vieux. Par exemple, si un message possède une date d'émission antérieure de plus d'une heure à l'heure courante, on peut décider qu'il ne sera plus diffusé plus loin par les noeuds qui le reçoivent. Dans une autre solution, on compte les mailles du réseau. On peut admettre que si le réseau a une longueur de N mailles, chaque noeud qui reçoit un message compte les occurrences de la réception de ce message et cesse de le renvoyer lorsque le nombre de ces occurrences a atteint le nombre N.

Une autre méthode consiste à mémoriser les messages dans chaque noeud et à vérifier que ces messages ont déjà été reçus une fois. S'ils ont déjà été reçus une fois, ils ne sont pas rediffusés par le noeud qui les a reçus. Cette dernière méthode est moins consommatrice des ressources du réseau (puisque le nombre d'occurrences est limité à 1), mais provoque néanmoins des redondances d'envoi de chaque message, au moins une fois, au niveau de chaque noeud. En définitive, avec toutes ces solutions, le réseau travaille avec une efficacité inférieure à son efficacité nominale.

D'autres solutions consistent à mémoriser une architecture de réseau dans le message, et à imposer le passage d'un message par des branches ou des artères du réseau identifiées préalablement. Ces solutions sont aussi pénalisantes : les messages comportent alors une signalisation pléthorique qui se superpose à l'information utile à envoyer. Un autre inconvénient présenté par cette technique est que, en cas de modification de l'architecture du réseau, il faut modifier dans chaque noeud et dans chaque message la nature du routage pour tenir compte des nouvelles organisations des mailles du réseau.

Le document US 5.056.085 décrit un procédé consistant, dans un noeud source, à :
- désigner périodiquement un paquet comme paquet d'initialisation pour établir de routes de diffusion, incorporer à ce paquet l'identité du noeud source et un identificateur de message, diffuser ce paquet dans le réseau, en démarrant une première temporisation définissant un premier intervalle de temps fixé pour recevoir un accusé de réception ;
- dans chaque noeud récepteur, tenir à jour une table de contraintes, mémorisant l'identité du noeud ayant émis chaque message d'initialisation reçu, l'identité de chaque message d'initialisation reçu, et tenir à jour une table de routage de diffusion, cette table étant indexée par l'identité du noeud ayant émis chaque message d'initialisation reçu, et l'identité de chaque message d'initialisation reçu; et lorsqu'un message d'initialisation est reçu, vérifier si l'identité du noeud ayant émis ce message d'initialisation reçu, et l'identité de ce message d'initialisation reçu sont ou non déjà mémorisés dans la table de contraintes, et :
   -- si c'est le cas, rejeter le message d'initialisation,
   -- si ce n'est pas le cas, envoyer un accusé de réception au noeud qui a émis ce message d'initialisation, puis retransmettre ce message à d'autres noeud conformément à la table de routage de diffusion, démarrer une seconde temporisation définissant un second intervalle de temps fixé pour recevoir un accusé de réception en provenance de ces autres noeuds ; mémoriser dans la table de contraintes l'identité du noeud source et l'identité du message, mémoriser dans une colonne "reçu de" de la table de routage de diffusion, l'identité du noeud qui a fourni ce message ; et mémoriser dans une colonne "envoi" de la table de routage l'identité des noeuds qui ont envoyés des accusés de réception pendant le second intervalle de temps ;
- dans le noeud source, recevoir les accusés de réception correspondant aux messages d'initialisation émis par ce noeud ; incorporer dans des messages ordinaires (différents des messages d'initialisation), l'identité du noeud source et l'identité de message d'initialisation pour lequel le premier intervalle de temps a expiré le plus récemment, et envoyer ces messages ordinaires, aux noeuds à l'origine d'un accusé de réception qui a été reçu par le noeud source ;
- et dans chaque noeud qui reçoit ce message ordinaire, déterminer si l'identité du noeud émetteur du message ordinaire est mémorisée dans la colonne "reçu de", de la table de routage de diffusion, et :
   -- si c'est le cas, retransmettre le message aux autres noeuds dont l'identité est inscrite dans la colonne "envoi" de la table de routage de diffusion,
   -- si ce n'est pas le cas, ne pas retransmettre le message ordinaire.

Ce procédé est assez complexe à mettre en oeuvre, à cause de la gestion des temporisations. Le but de l'invention est de remédier à cet inconvénient.

L'objet de l'invention est un procédé de distribution d'un message dans un réseau de noeuds de communication comportant les étapes suivantes :
- diffuser un message d'initialisation aux noeuds du réseau à partir d'un noeud du réseau, notamment un noeud dont une configuration d'artère a été modifiée,
- recevoir ce message d'initialisation dans un noeud en aval à partir d'un noeud en amont,
- faire envoyer au noeud amont, par le noeud en aval, un signal d'accusé de réception de ce message d'initialisation qui est positif si le noeud aval a reçu une première fois le message d'initialisation à partir de ce noeud amont,
- enregistrer dans une mémoire du noeud amont une table dont les enregistrements comportent, en regard d'une nature de message et de l'identité du noeud aval, une information positive si ce noeud reçoit un accusé de réception positif provenant de ce noeud aval,
- envoyer des messages courants à des noeuds avals en relation avec un noeud amont si leur nature et l'identité du noeud aval sont en correspondance d'une information positive;
**caractérisé** en ce qu'il consiste en outre à :
- faire envoyer au noeud amont, par le noeud en aval, un signal d'accusé de réception, de ce message d'initialisation, qui est négatif si le noeud aval a déjà reçu au moins une fois le message d'initialisation à partir de ce noeud amont,
- et enregistrer dans la mémoire du noeud amont, en regard la nature de message et de l'identité du noeud aval, une information négative si ce noeud reçoit un accusé de réception négatif provenant de ce noeud aval.

Le procédé ainsi caractérisé est plus simple à mettre en oeuvre parce que l'utilisation d'accusés de réception négatifs permet d'éviter l'utilisation de deux temporisations.

L'invention sera mieux comprise à la lecture de la description qui suit et à l'examen des figures qui l'accompagnent. Celles-ci ne sont données qu'à titre indicatif et nullement limitatif de l'invention. Les figures montrent :
Figure 1 : la représentation schématique d'un réseau dans lequel chaque noeud est muni, en complément, d'une table de diffusion selon l'invention,
Figure 2 : un algorithme de traitement d'un message d'initialisation ou d'un message courant, selon l'invention.

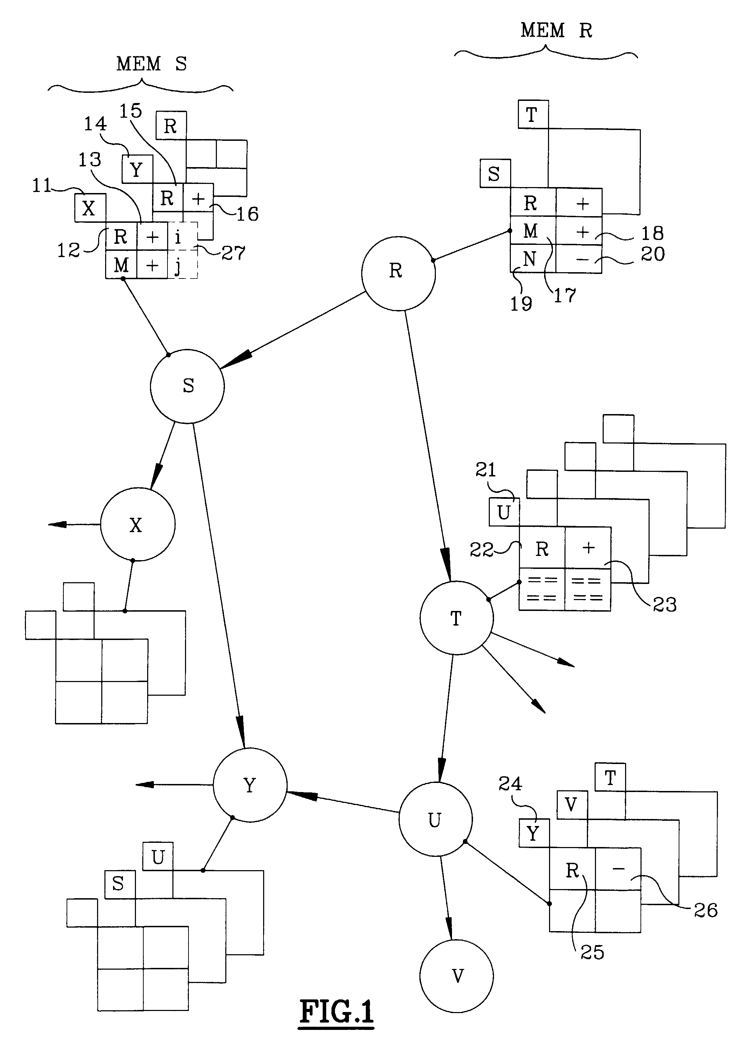

La figure 1 montre un réseau de communications entre des noeuds. Le réseau comporte ici les noeuds R, S, T, U, V, X et Y. Chaque noeud possède plusieurs voisins. Ainsi le noeud R possède comme voisins les noeuds S et T. Le noeud S possède comme voisins les noeuds X et Y, en plus du noeud R. Le noeud T possède comme voisins le noeud U et deux autres noeuds non identifiés en plus du noeud R. Le noeud U possède comme voisins le noeud V et le noeud Y en plus du noeud T. On constate que le noeud Y peut contribuer à former une boucle puisqu'il reçoit des informations en provenance du noeud U et en provenance du noeud S. Le noeud Y peut ainsi renvoyer sur le noeud U des informations qu'il reçoit du noeud S, et sur le noeud S des informations qu'il reçoit du noeud U. Si on n'y prend garde, une diffusion à partir du noeud Y peut ainsi contribuer à embouteiller le trafic sur le réseau et en réduire le débit.

Selon l'invention, on va considérer que la modification de l'architecture du réseau a consisté, dans un exemple, à modifier les artères aboutissant au noeud R dans le réseau. Le noeud R, du fait de la modification dont il fait l'objet, envoie un message d'initialisation indiquant ce changement. Ce message d'initialisation n'est envoyé qu'une seule fois. On pourrait cependant envisager de l'envoyer plusieurs fois en en changeant le numéro d'ordre. Le message d'initialisation est relatif à chacune des artères nouvelles qui relie le noeud R à ses voisins. Ainsi, il y pourra y avoir un message relatif à l'artère R S et à l'artère RT ou RS et RT en même temps. Ou encore un même message d'initialisation pourra concerner une liste d'artères modifiées dans le réseau.

On va examiner le parcours du message d'initialisation relatif à la création de l'artère R S.

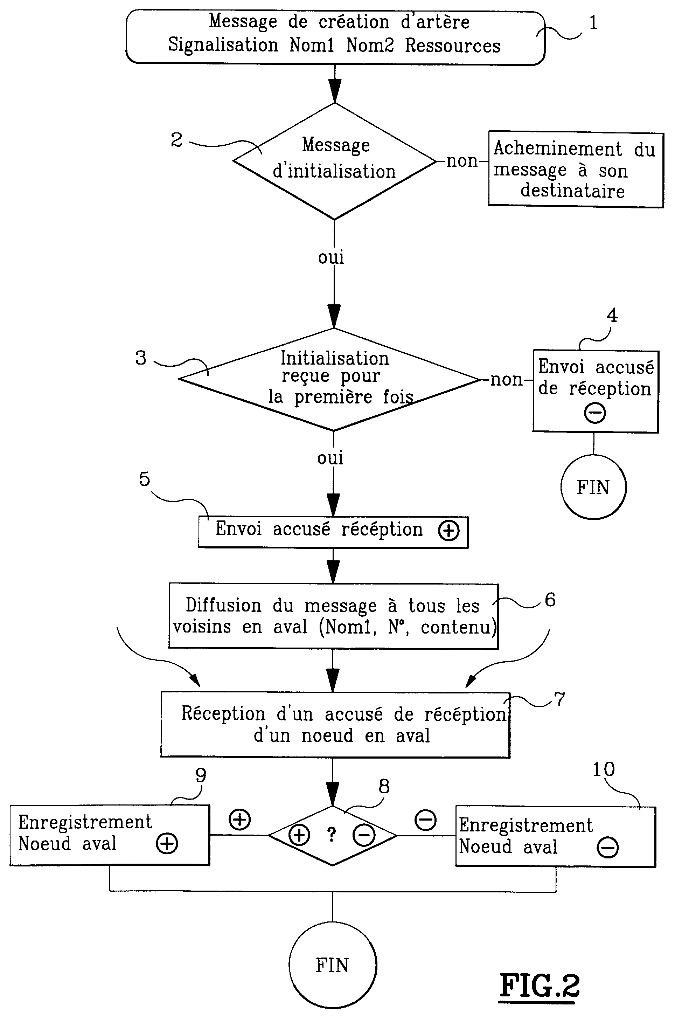

Ce message d'initialisation, conformément à l'étape 1 de l'organigramme de la figure 2, comporte en entête une signalisation suivie d'une désignation d'un nom Nom 1 de noeud émetteur du message, c'est à dire ici le nom R. Le message d'initialisation comporte encore la désignation d'un nom Nom 2 du noeud aval adjacent : le noeud S. Les noms Nom 1 et Nom 2 sont les noms des noeuds de l'artère modifiée. En outre, à titre d'information, le message d'initialisation peut comporter la liste des ressources que le noeud R est susceptible de mettre à la disposition du réseau ainsi qu'éventuellement des particularités de protocole (et donc de filtrage) des messages que le noeud R est susceptible d'acheminer.

Dans la signalisation du message 1, outre des bits traditionnels de début et de fin de message, de type de protocole du message, de vitesse de transmission du message et ainsi de suite, se trouve une information relative au fait que le message est un message d'initialisation ou non. Ainsi, un bit de rang donné parmi les bits de la signalisation, ou une conformation particulière des bits de signalisation, sera à un état binaire correspondant. On connaît notamment les messages envoyés à un destinataire identifié et les messages qui doivent être diffusés. Dans une zone de diffusion des bits de signalisation du message, le bit de diffusion est porté à 1 ou à 0. Dans l'invention, on peut choisir que le bit de signalisation sera équivalent ou même remplacera le bit de diffusion. Au moment de la réception du message, ce bit sera reconnu dans un noeud et le message sera traité comme un message d'initialisation.

Au cours d'un premier test 2, un noeud récepteur du message, ici par exemple le noeud S, dans un premier temps, va tester le message pour savoir s'il s'agit d'un message d'initialisation. Si ce n'est pas le cas, il acheminera le message vers son destinataire comme cela sera vu plus loin. Par contre, s'il s'agit d'un message d'initialisation, au cours d'un deuxième test 3, le noeud S va rechercher s'il a déjà reçu ce message d'initialisation ou non. Si le message d'initialisation a déjà été reçu, il n'est pas reçu pour la première fois à partir du noeud R. Dans ce cas, le noeud aval S envoie au noeud amont R qui vient de lui envoyer le message d'initialisation, au cours d'une étape 4, un accusé de réception négatif. Le noeud S ne propage bien entendu pas plus loin le message d'initialisation qu'il aurait lui-même déjà reçu auparavant.

Par contre, si le message d'initialisation n'avait jamais été reçu préalablement par le noeud S, celui-ci envoie au noeud R un accusé de réception positif au cours d'une étape 5. Puis le noeud S, qui devient ainsi amont, entreprend par l'étape 6 la diffusion du message d'initialisation à tous ses voisins en aval : les noeuds X et Y. Après l'étape 6, le noeud S reçoit de ses noeuds en aval X et Y, les accusés de réception au cours d'une étape 7.

Dans une étape ultérieure de test 8, le noeud S évalue la nature des accusés de réception reçus. Ces accusés de réception sont négatifs ou positifs selon que les noeuds en aval ont respectivement déjà reçu le message d'initialisation ou ne l'ont pas déjà reçu. Au cours d'étapes respectivement 9 ou 10, le noeud S constitue une table et enregistre un enregistrement correspondant à la nature des accusés de réception.

La figure 1 montre pour le noeud S une table MEM S. La table MEM S comporte, pour une zone 11, une sous table affectée aux envois de messages à destination du noeud X. La valeur X est renseignée en zone 11 de la sous table. La sous table comporte des enregistrements renseignant le fait qu'un message envoyé par le noeud R, zone 12 de la sous table, a reçu un accusé de réception positif (ou négatif) : zone 13 de la sous table. Le message d'initialisation a également été envoyé au noeud Y à partir du noeud S qui a constitué une autre sous table avec des enregistrements correspondants dans des zones 14,15 et 16. Il est important de noter que le triplet des informations X R +, est essentiel. Ce triplet peut être enregistré sous la forme de doublets R + affectés à une sous table X, ou sous la forme de doublets R + affecté à une sous table Y. Il peut aussi être enregistré sous la forme de doublets X +, ou Y +, affectés à un sous table R. Le but à atteindre dans tous les cas est de mettre en correspondance, dans les enregistrements d'une table du noeud S, les informations R, X, et + (ou -).

Sur la figure 1 on a montré que le noeud R a émis à destination du noeud S un message que lui-même a constitué. Cependant, une mémoire MEM R du noeud R (du même type que la mémoire MEM S) comporte dans des zones 17 et 18 des informations relatives au fait que le noeud R a servi de retransmetteur actif, à destination du noeud S, pour les messages émis par un noeud M non représenté. De même, en zones 19 et 20, on a montré qu'un message d'initialisation provenant du noeud N et transitant par le noeud R pour aboutir au noeud S, a été pris de vitesse par un message d'initialisation qui a aboutit à ce noeud S préalablement. En conséquence, le noeud R a noté en zone 20 le caractère en retard de l'envoi au noeud S à partir du noeud R des messages en provenance du noeud N.

Le message émis par R a pu avoir transité par ailleurs par les noeuds T et U avant d'aboutir au noeud Y. En arrivant dans le noeud T, celui-ci l'a retransmis au noeud U et a constitué une table, affectée à U, zone 21. La réception d'un accusé de réception positif du noeud U a été notée dans la table correspondante par l'enregistrement R + dans les zones 22 et 23. Quand le message d'initialisation en provenance du noeud R a été envoyé par le noeud U au noeud Y, le noeud Y a renvoyé au noeud U un accusé de réception négatif. En effet le noeud, le noeud Y avait déjà reçu par le noeud S le message d'initialisation émis par le noeud R. Le noeud Y, par le test 3, a pu le constater. Cet accusé de réception négatif a été enregistré dans les zones 24 à 26 de la table du noeud U.

En définitive, chaque noeud possède une mémoire avec des tables ou des sous tables affectées à chacun des noeuds qui l'environnent. Dans chacune de ces tables, des enregistrements signalent que les messages en provenance des autres noeuds du réseau, doivent ou ne doivent pas être transmis aux noeuds voisins en aval. Ainsi, l'opération d'acheminement du message à son destinataire, envisagé à l'issue du test 2, comportera par ailleurs, un test selon lequel on cherchera à savoir si, en fonction de l'origine du message, celui-ci doit être acheminé ou non en aval à un noeud voisin du noeud considéré.

La lecture des tables correspondantes renseignera sur cette nécessité. Ainsi, la lecture des zones 25 et 26 par le noeud U indiquera que les messages provenant du noeud R, et qui ne sont pas des messages d'initialisation ou de diffusion, n'ont pas à être acheminés par le noeud U vers le noeud Y.

On aurait pu, en variante, informer le noeud T que tous les messages en provenance du noeud R destinés au noeud Y et qui passent par le noeud U, ne doivent pas être acheminés par le noeud T. On aurait ainsi évité que le noeud T n'émette inutilement un message à destination du noeud U alors que le noeud U va ultérieurement bloquer la diffusion de ce message. Ceci conduirait à modifier les tables.

Ainsi, la table enregistrée dans le noeud T, au lieu de connaître un triplet d'informations du type U R + (ou -), devrait connaître un quartet U R Y + (ou -). Le noeud U possède lui-même d'autres noeuds voisins, par exemple le noeud V. On voit que cette méthode conduirait à enregistrer des messages plus longs: avec l'indication supplémentaire de Y dans l'enregistrement. Elle conduirait également à enregistrer plus d'enregistrements puisqu'il faudrait en même temps considérer le sort du message émis par R transmis par T à U et qu'on destine au noeud V. Néanmoins, une telle complexité de tables sera envisageable si le nombre des noeuds n'est pas trop important. On pourrait montrer que la taille de la table évoluerait comme une exponentielle dont l'exposant serait égal au nombre de noeuds dans l'historique duquel on voudrait intervenir. On cherchera donc un compromis entre la taille des mémoires MEM k et l'efficacité du réseau. Le cas échéant les accusés de réception du noeud Y au noeud U doivent être eux-mêmes rétrodiffusés du noeud U au noeud T.

Pour simplifier le test 3, on a prévu dans l'invention, de compléter les tables ou sous tables par une information complémentaire d'identification plus simple. En effet, le noeud R, s'il était déjà un noeud présent dans le réseau, mais qu'il a vu son architecture de connexion se modifier, peut avoir compté les messages qu'il a émis. Le noeud R attribue ainsi à chaque nouveau message, donc aussi aux messages d'initialisation à constituer, un nouveau numéro d'ordre. Par exemple, les nouveaux numéros sont égaux aux anciens incrémentés d'une unité. Dans ces conditions, le message d'initialisation envoyé par le noeud R pour diffusion, comportera un numéro i. Le test 3 dans chaque noeud pourra consister alors à reconnaître le nom Nom 1 du message : savoir si le message vient du noeud R. Une fois que ce premier test aura été fait, il conviendra de relever le numéro du message. Si le numéro i est déjà présent dans la table pour les messages reçus de R, on saura que ce message a été déjà reçu. C'est le cas par exemple pour le noeud Y dans l'exemple présenté jusqu'ici. Par contre, si le numéro i pour les messages émis par le noeud R n'est pas présent dans la table du noeud, par exemple du noeud S, ce noeud S enregistrera, avant même d'avoir reçu les accusés de réception, dans les tables affectées à chacun des noeuds aval du noeud amont S, une information R i en colonnes 12 et 27 respectivement. Puis les accusés de réception seront portés en colonne 13 au fur et à mesure de leur réception. Le message d'accusé de réception comportera donc quant à lui, de préférence, les informations R, i, + (ou -), et une indication selon laquelle il s'agit d'un message d'accusé de réception

Dans l'invention on enregistre donc dans une mémoire amont MEM S une table dont les enregistrements comportent en regard d'une nature du message (R) et d'une identité du noeud aval (X), une information positive ou négative en correspondance de cette réception. D'une manière préférée, la nature du message est l'information de l'identité elle-même du noeud R qui a été concernée par la modification d'une artère du réseau. Néanmoins, il pourrait s'agir d'une autre information. Par exemple, il pourrait s'agir d'un autre identificateur, notamment d'un identificateur de protocole, d'un identificateur de service ou de classe de service.

## Revendications

1. Procédé de distribution d'un message (1) dans un réseau (R-V, X, Y) de noeuds de communication comportant les étapes suivantes :
- diffuser un message d'initialisation aux noeuds du réseau à partir d'un noeud du réseau, notamment un noeud dont une configuration d'artère a été modifiée,
- recevoir ce message d'initialisation dans un noeud (Y) en aval à partir d'un noeud (S) en amont,
- faire envoyer au noeud amont, par le noeud en aval, un signal (R, i, +) d'accusé de réception de ce message d'initialisation qui est positif (+) si le noeud aval a reçu une première fois le message d'initialisation à partir de ce noeud amont,
- enregistrer dans une mémoire (MEM S) du noeud amont une table dont les enregistrements comportent, en regard d'une nature (R) de message et de l'identité (X) du noeud aval, une information positive si ce noeud reçoit un accusé de réception positif provenant de ce noeud aval,
- envoyer des messages courants à des noeuds avals en relation avec un noeud amont si leur nature et l'identité du noeud aval sont en correspondance d'une information positive;
**caractérisé** en ce qu'il consiste en outre à :
- faire envoyer au noeud amont, par le noeud en aval, un signal (R, i, -) d'accusé de réception, de ce message d'initialisation, qui est négatif (-) si le noeud aval a déjà reçu au moins une fois le message d'initialisation à partir de ce noeud amont,
- et enregistrer dans la mémoire (MEM S) du noeud amont, en regard la nature (R) de message et de l'identité (X) du noeud aval, une information négative si ce noeud reçoit un accusé de réception négatif provenant de ce noeud aval.

2. Procédé selon la revendication 1, caractérisé en ce qu'il consiste en outre à enregistrer, à titre de nature du message, l'identité (R) d'un noeud émetteur qui est à l'origine du message.

3. Procédé selon l'une des revendications 1 à 2, caractérisé en ce que le message d'initialisation comporte une information d'identité (Nom 1, Nom 2) des noeuds qui sont concernés par la modification d'une artère du réseau, et une information sur la nature des ressources disponibles dans le noeud émetteur du message.

4. Procédé selon l'une des revendications 1 à 3, caractérisé en ce que le message d'initialisation comporte une information de liste d'identité d'artères modifiées dans le réseau.

5. Procédé selon l'une des revendications 1 à 4, caractérisé en ce que dans chaque noeud aval, il consiste en outre à :
- tester (2) si le message est un message d'initialisation, et
- mettre en oeuvre l'envoi (5) des accusés de réception et leur enregistrement dans la table le cas échéant.

6. Procédé selon la revendication 5, caractérisé en ce qu'il consiste en outre à :
- compléter le contenu des messages d'initialisation en leur donnant un numéro (i),
- enregistrer le numéro dans la table en regard de la nature du message et de l'identité du noeud aval,
- tester qu'un message d'initialisation a déjà été reçu en comparant son numéro à un numéro déjà présent dans la table.
